# EUROPÄISCHE PATENTSCHRIFT

(11) **EP 1 578 678 B1**
(45) Veröffentlichungstag und Bekanntmachung des Hinweises auf die Patenterteilung: **28.06.2006**
(21) Anmeldenummer: 03789378.1
(22) Anmeldetag: 20.12.2003
(51) Int. Cl.: B65G 17/26, B65G 47/84, B65B 35/24, B65G 15/44

(54) **VORRICHTUNG ZUR KONTINUIERLICHEN ABGABE VON BEUTELN**
DEVICE FOR CONTINUOUSLY DELIVERING BAGS
DISPOSITIF DE DISTRIBUTION CONTINUE DE SACHETS

(30) Priorität: 30.12.2002 DE 10261707; 08.12.2003 DE 10357227
(43) Veröffentlichungstag der Anmeldung: 28.09.2005
(73) Patentinhaber: Fresenius Kabi Deutschland GmbH, 61352 Bad Homburg v.d.H. (DE)
(72) Erfinder: HEIMSOTH, Andreas, 29664 Walsrode (DE)
(74) Vertreter: Schüll, Gottfried Hubert
(86) Internationale Anmeldenummer: PCT/EP2003/014699
(87) Internationale Veröffentlichungsnummer: WO 2004/058604

(56) Entgegenhaltungen:
- WO-A-01/85544
- DE-A- 19 813 120
- DE-C- 604 249

## Beschreibung

Die Erfindung betrifft eine Vorrichtung zur kontinuierlichen Abgabe von Beuteln mit mindestens einer Beutelübergabevorrichtung und mindestens einem Lineartransport, wobei die Beutelübergabevorrichtung die Beutel an mindestens einen Lineartransport übergibt nach dem Oberbegriff des Anspuchs 1, wie sie aus der DE 198 13 120 A bekannt ist.

Unter Beuteln im Sinne der Erfindung sind insbesondere Standbodenbeutel, aber auch beispielsweise einfache Beutel oder Seitenfaltenbeutel zu verstehen. Derartige Beutel werden zunehmend als Verpackungen im Food oder Non-Food Bereich eingesetzt und zwar sowohl für flüssige oder zumindest teilweise flüssige Füllgüter als auch für schüttfähige Füllgüter. Die erfindungsgemäße Vorrichtung zur kontinuierlichen Abgabe von Beuteln ist zum Einsatz innerhalb von Vorrichtungen und Verfahren zum Befüllen von Beuteln, die hohe Füllfrequenzen gewährleisten, vorgesehen. Eine solche Vorrichtung und ein entsprechendes Verfahren werden beispielsweise in der ebenfalls auf den Anmelder zurückgehenden Patentanmeldung PCT/EP00/04541 beschrieben.

Aus dem Stand der Technik seit längerem bekannte Vorrichtungen zum Befüllen von Beuteln arbeiten getaktet und bieten dementsprechend im Gegensatz zu kontinuierlich arbeitenden Vorrichtungen zum Befüllen von beispielsweise Glas- oder Polyethylenflaschen nur niedrige Füllfrequenzen von etwa 20 bis 30 Beuteln pro Minute.

Demgegenüber sind bekannte Vorrichtungen zum Befüllen von beispielsweise Glas- oder Polyethylenflaschen in der Lage, Füllfrequenzen von 1000 und mehr Behältern pro Minute zu realisieren. Dadurch, dass diese hohen Füllfrequenzen beim Befüllen von Beuteln bislang nicht erreicht werden können, ist die Verwendung von Beuteln zur Zeit im wesentlichen auf Produkte beschränkt, die nicht in sehr hohen Stückzahlen hergestellt werden.

Durch die mit den konventionellen Vorrichtungen zum Befüllen von Beuteln zur Zeit erreichbaren, niedrigen Füllfrequenzen entsteht das Problem, dass Anlagen, die neben dem Füllen und Verschließen der Beutel auch die Herstellung der Beutel ermöglichen, bislang kaum Verwendung gefunden haben. Dies resultiert daraus, dass Maschinen zur Herstellung von Beuteln in hoher Qualität sehr hohe Anforderungen an die mechanische Ausrüstung stellen und damit Investitionen erfordern, die sich in der Regel nur dann wirtschaftlich begründen lassen, wenn die Beutel in sehr hoher Frequenz hergestellt werden. Dies führt zur Zeit dazu, dass Vorrichtungen zum Befüllen von Beuteln in der Regel mit an anderer Stelle vorgefertigten Beuteln betrieben werden, die in den lediglich kleine Frequenzen gewährleistenden bekannten Vorrichtungen zum Befüllen von Beuteln nur noch befüllt und versiegelt werden.

Um mit einer Vorrichtung zum Befüllen von Beuteln die angesprochenen hohen Füllfrequenzen zu gewährleisten, ist es notwendig, dass die Beutel hinreichend schnell und zuverlässig angeliefert werden und mit der notwendigen Geschwindigkeit vereinzelnd und dem kontinuierlichen Weiterverarbeitungsprozess zugeführt werden. Hierzu ist es beispielsweise aus der PCT/EP00/04541 bekannt, dass die flachen Beutel aus einem Magazin oder von einer Anlage zur Herstellung der Beutel in Stapelträgern abgelegt werden, die zur Aufnahme einer Vielzahl von gestapelten, flachen Beuteln geeignet sind. Diese Stapelträger werden von einem Förderer, vorzugsweise einem Einzelförderer unter Zwischenschaltung von Puffern, einer Vorrichtung zur Entnahme und Vereinzelung von Beuteln aus diesen Stapelträgern zugeführt.

Die Entnahme der Beutel aus dem Stapelträgern mit einer einzelne Beutel für sich entnehmenden Vorrichtung hat sich als nicht hinreichend zuverlässig und schnell erwiesen.

Darüber hinaus wurden Versuche mit einer Vorrichtung zur Entnahme und Vereinzelung von Beuteln aus Stapelträgern mit mindestens einer die Beutelstapel aus den Stapelträgern entnehmenden Entnahmestation, mindestens einer mit einem Magazin versehenen Anlegerstation, einem Taschenelement und einem Riemenförderer durchgeführt, wobei jeder Tasche des Taschenelementes eine Anlegerstation zugeordnet ist und der Riemenförderer zwischen den Anlegerstationen und dem Taschenelement angeordnet ist. Bei der Vereinzelung der Beutel mit Hilfe der Anlegerstation wird der Beutel durch den geöffneten Riemenförderer in die Taschen des Taschenelementes gefördert, woraufhin sich der Riemenförderer schließt, sich anschließend das Taschenelement öffnet und schließlich die vom Riemenförderer erfassten Beutel aus dem Bereich des Taschenelementes an nachfolgende Riemenförderer übergeben werden. Durch den Öffnungs- und Schließvorgang des Riemenförderers erfolgt die Übergabe jedoch weiterhin getaktet, sodass eine sehr hohe Verarbeitungsfrequenzen gewährleistende kontinuierliche Abgabe der Beutel noch nicht erreicht werden kann.

Ausgehend von der zuvor beschriebenen Problematik liegt der vorliegenden Erfindung die Aufgabe zugrunde, eine Vorrichtung zur kontinuierlichen Abgabe von Beuteln zur Verfügung zu stellen, mit Hilfe derer eine kontinuierliche Weiterverarbeitung mit sehr hoher Frequenz und hoher Zuverlässigkeit gewährleistet ist.

Erfindungsgemäß wird die zuvor hergeleitete und aufgezeigte Aufgabe dadurch gelöst, dass ein kontinuierlich arbeitender Lineartransport mit Beutelaufnahmen vorgesehen ist und die Breite der Beutelaufnahmen in Transportrichtung größer als die Breite der aufzunehmenden Beutel ist.

Die Beutelübergabevorrichtung übergibt die Beutel an den Lineartransport, in dem es die Beutel in die Beutelaufnahmen fördert. Die vergrößerten Beutelaufnahmen gewährleisten dabei, dass die Beutelübergabevorrichtung die Beutel an den kontinuierlich arbeitenden Lineartransport übergeben kann, ohne dass der Lineartransport gestoppt werden muss. Durch die Berücksichtigung der Wegstrecke, welche der Lineartransport während der Übergabe der Beutel durch die Beutelübergabevorrichtung zurücklegt, kann auf einfache Weise eine kontinuierliche Abgabe von Beuteln durch den Lineartransport, beispielsweise an eine nächste Beutelbehandlungsvorrichtung, gewährleistet werden.

Gemäß einer ersten Ausführungsform der erfindungsgemäßen Vorrichtung zur kontinuierlichen Abgabe von Beuteln, können Beutelaufnahmen auf besonders einfache Weise dadurch zur Verfügung gestellt werden, dass die Beutelaufnahmen an dem Lineartransport befestigte oder an den Lineartransport angeformte Aufnahmeelemente aufweisen. Dabei bilden beispielsweise zwei benachbarte Aufnahmeelemente jeweils eine Beutelaufnahme zur Aufnahme der Beutel aus der Beutelübergabevorrichtung, mit deren Hilfe die Beutel vom Lineartransport transportiert werden. Es sind jedoch auch Aufnahmeelemente denkbar, welche jeweils einen Beutel aufnehmen können.

Vorzugsweise weist der Lineartransport mindestens eine die Beutel führende seitliche und/oder untere Führungsschiene auf, sodass besonders einfache am Lineartransport befestigte oder an den Lineartransport angeformte Aufnahmeelemente, beispielsweise Aufnahmeelemente mit einer einfachen rechteckigen Querschnittsfläche, für die Beutelaufnahmen verwendet werden können. Dabei wird der Beutel beispielsweise durch die Aufnahmeelemente in Transportrichtung auf der unteren Führungsschiene verschoben und gegebenenfalls durch die seitliche Führungsschiene gestützt.

Eine sichere Übergabe und ein sicherer Transport der Beutel in den Beutelaufnahmen kann, gemäß einer weitergebildeten Ausführungsform der erfindungsgemäßen Vorrichtung zur kontinuierlichen Abgabe von Beuteln, dadurch gewährleistet werden, dass die Aufnahmeelemente mindestens eine Ausnehmung in der Querschnittsfläche senkrecht zur Transportrichtung aufweisen und mindestens eine Ausnehmung an eine seitliche Führungsschiene angepasst ist. Derartige Aufnahmeelemente ermöglichen, dass die seitliche Führungsschiene innerhalb der Ausnehmung der Aufnahmeelemente verläuft und kein senkrecht verlaufender Spalt zwischen seitlicher Führungsschiene und Aufnahmeelementen entsteht. Hierdurch wird ein Verklemmen der Beutel im Bereich der seitlichen Führungsschiene wirkungsvoll verhindert. Auf einfache Weise kann dies beispielsweise durch eine senkrecht zur Transportrichtung C-förmige Querschnittsfläche der Aufnahmeelemente gewährleistet werden.

Die Anzahl der Beutel, die pro Zeiteinheit abgegeben werden können, kann dadurch weiter gesteigert werden, dass ein zweiter kontinuierlich arbeitender Lineartransport mit Beutelaufnahmen vorgesehen ist und beide Lineartransporte gegenüberliegend und parallel angeordnet sind. Insbesondere schnell arbeitende Beutelübergabevorrichtungen können so ohne großen Aufwand die Beutel gleichzeitig an zwei Lineartransporte übergeben. Darüber hinaus kann durch einen derartigen Aufbau beispielsweise eine seitliche und/oder untere Führungsschiene durch beide Lineartransporte genutzt werden.

Eine optimierte Übergabe der Beutel sowohl von einer Beutelübergabevorrichtung an den Lineartransport als auch von den gegenüberliegenden Lineartransporten an einen in Transportrichtung an die erfindungsgemäße Vorrichtung nachgeordneten Lineartransport kann dadurch gewährleistet werden, dass die gegenüberliegenden Lineartransporte in Transportrichtung konisch zulaufend angeordnet sind. Einerseits ergibt sich im Bereich der Übergabe der Beutel durch eine Beutelübergabevorrichtung ein größerer Abstand der Beutelübergabevorrichtungen zueinander, so dass diese beispielsweise gegenüberliegend angeordnet werden können. Andererseits wird im Bereich des Auslaufs der gegenüberliegenden Lineartransporte der Abstand der gegenüberliegend transportierten Beutel minimal, so dass die Übergabe an einen der erfindungsgemäßen Vorrichtung nachgeordneten Lineartransportes verbessert wird. Um dies zu ermöglichen, ist es selbstverständlich notwendig, dass die vorzugsweise C-förmig ausgebildeten Aufnahmeelemente eine Ausnehmung mit entsprechender Tiefe aufweisen.

Vorzugsweise ist die Breite der Beutelaufnahmen größer oder gleich der doppelten Breite der aufzunehmenden Beutel, so dass im Bereich des Auslaufes der gegenüberliegend angeordneten Lineartransporte die Aufnahmeelemente des einen Lineartransportes die Beutelaufnahmen des anderen Lineartransportes in zwei mindestens die Breite der Beutel aufweisende Hälften teilt. Dadurch können die Beutel an einen nachfolgenden Lineartransport möglichst dicht aufeinanderfolgend übergeben werden.

Im allgemeinen ist die Verarbeitungskapazität der einzelnen Lineartransporte größer als der die Beutel übergebenden Beutelübergabevorrichtungen, sodass zur Erhöhung der Anzahl der abgegebenen Beutel vorzugsweise eine Mehrzahl von Beutelübergabevorrichtungen vorgesehen sind. Diese können beispielsweise nebeneinander und/oder gegenüberliegend angeordnet sein. Dabei ist es auch denkbar, dass die Beutelübergabevorrichtungen beispielsweise aus Platzgründen versetzt gegenüberliegend und/oder übereinander angeordnet sind.

Weisen, gemäß einer nächsten Ausführungsform der erfindungsgemäßen Vorrichtung zur kontinuierlichen Abgabe von Beuteln, die Beutelübergabevorrichtungen eine mit einem Magazin versehene Anlegestation auf, so ist die erfindungsgemäße Vorrichtung auf einfache Weise an die aus dem Stand der Technik bekannten Vorrichtungen zur Entnahme und Vereinzelung von Beuteln aus Stapelträgern angepasst.

Eine besonders kostengünstige Ausführungsform der erfindungsgemäßen Vorrichtung zur kontinuierlichen Abgabe von Beuteln wird dadurch erreicht, dass als Lineartransport mindestens ein Riemenförderer vorgesehen ist. Riemenförderer weisen, insbesondere bei der Verwendung von Zahnriemen, neben geringen Herstellkosten auch die notwendige Präzision und Haltbarkeit zum Transport der Beutel auf.

Es gibt nun eine Vielzahl von Möglichkeiten, die erfindungsgemäße Vorrichtung zur kontinuierlichen Abgabe von Beuteln auszugestalten und weiterzubilden. Hierzu wird beispielsweise verwiesen einerseits auf die dem Patentanspruch 1 nachgeordneten Patentansprüche, andererseits auf die Beschreibung bevorzugter Ausführungsbeispiele in Verbindung mit der Zeichnung. In der Zeichnung zeigt
- Fig. 1: ein erstes Ausführungsbeispiel einer erfindungsgemäßen Vorrichtung zur kontinuierlichen Abgabe von Beuteln in einer perspektivischen Ansicht,
- Fig. 2: ein zweites Ausführungsbeispiel der erfindungsgemäßen Vorrichtung mit zwei gegenüberliegenden Lineartransporten im Zeitpunkt der Beutelübergabe in einer perspektivischen Ansicht,
- Fig. 3: ebenfalls in einer perspektivischen Ansicht das Ausführungsbeispiel aus Fig. 2 nach abgeschlossener Beutelübergabe und
- Fig. 4: ein drittes Ausführungsbeispiel der erfindungsgemäßen Vorrichtung mit konisch aufeinander zulaufend angeordneten Lineartransporten in einer Aufsicht.

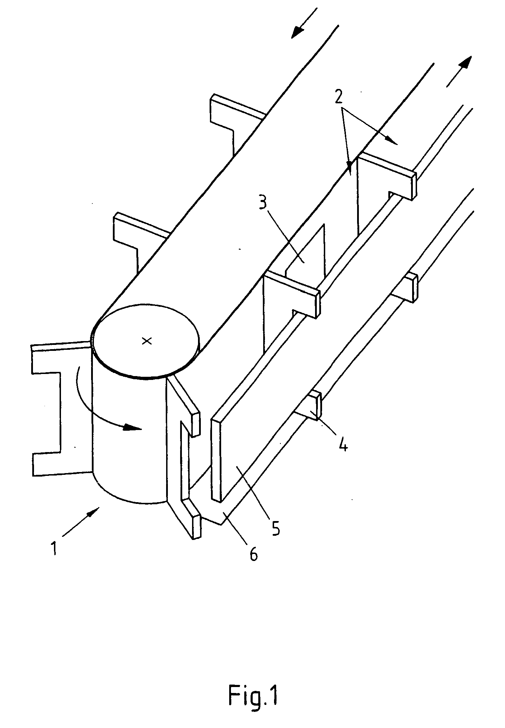

Das in Fig. 1 dargestellte Ausführungsbeispiel einer erfindungsgemäßen Vorrichtung zur kontinuierlichen Abgabe von Beuteln weist einen kontinuierlich arbeitenden Lineartransport 1 mit Beutelaufnahmen 2 zur Aufnahme der von einer in Fig. 1 nicht dargestellten Beutelübergabevorrichtung übergebenen Beutel 3 auf. Die Beutelaufnahmen 2 weisen dabei senkrecht zur Transportrichtung an den Lineartransport angeformte Aufnahmeelemente 4 auf, wobei jeweils zwei benachbarte Aufnahmeelemente 4 eine Beutelaufnahme 2 bilden. Der Abstand der Aufnahmeelemente 4, welcher die Breite der Beutelaufnahmen 2 in Transportrichtung bestimmt, ist größer als die Breite der aufzunehmenden Beutel 3, sodass die vom Lineartransport 1 während der Übergabe der Beutel 3 zurückgelegte Strecke berücksichtigt werden kann und die diskontinuierlich von der nicht dargestellten Beutelübergabevorrichtung übergebenen Beutel 3 durch den Lineartransport 1 kontinuierlich abtransportiert und kontinuierlich an nachgeschaltete Beutelbehandlungsvorrichtungen abgegeben werden können.

Die in Fig. 1 dargestellten Aufnahmeelemente 4 weisen senkrecht zur Transportrichtung eine C-förmige Querschnittsfläche auf, sodass die seitliche Führungsschiene 5 in der Ausnehmung verläuft und kein geradliniger Spalt zwischen Aufnahmeelementen und Führungsschiene entsteht. Prinzip bedingt wird durch diese Maßnahme ein Verklemmen der zu transportierenden Beutel 3 zwischen der seitlichen Führungsschiene 5 und dem Aufnahmeelement verhindert. Der durch die nicht dargestellte Beutelübergabevorrichtung in die Beutelaufnahme 2 eingebrachte Beutel 3 wird, wie in Fig. 1 weiter dargestellt ist, mit Hilfe des Lineartransportes 1 auf der unteren Führungsschiene 6 verschoben und somit transportiert. Zur Verringerung der Reibung auf der unteren Führungsschiene 6 kann diese beispielsweise aus poliertem und/oder strukturiertem Material, beispielsweise einem Blech, hergestellt werden. Allerdings können auch andere reibungsarme und verschleißarme Werkstoffe zur Herstellung der unteren Führungsschiene 6 verwendet werden.

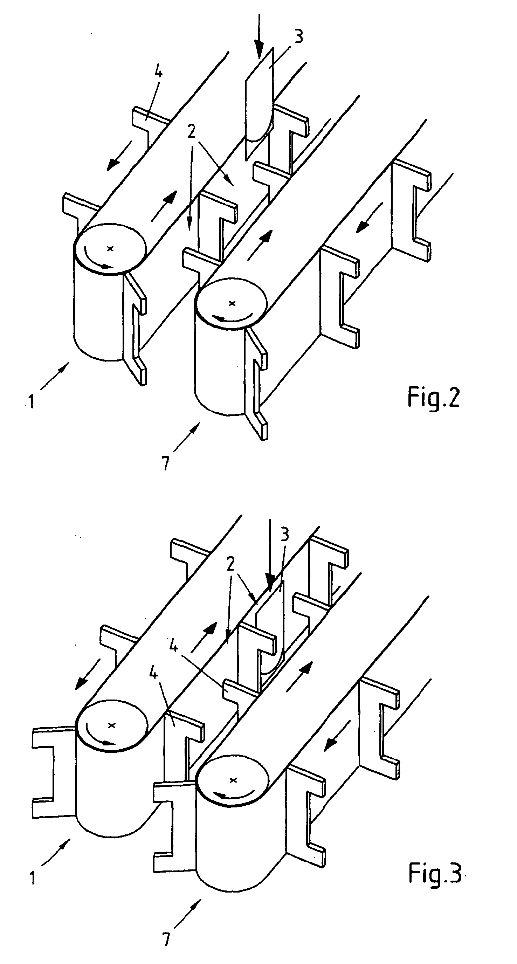

Das in Fig. 2 und Fig. 3 dargestellte zweite Ausführungsbeispiel der erfindungsgemäßen Vorrichtung zur kontinuierlichen Abgabe von Beuteln weist neben einem ersten Lineartransport 1 einen zweiten kontinuierlich arbeitenden Lineartransport 7 auf, welcher gegenüberliegend und parallel zum ersten Lineartransport 1 angeordnet ist. Vorzugsweise werden als Lineartransporte 1, 7 Riemenförderer verwendet, da diese bei geringen Herstellungskosten eine ausreichende Genauigkeit gewährleisten. Benachbarte an die Lineartransporte 1,7 angeformten Aufnahmeelemente 4 bilden die Beutelaufnahmen 2, an die die Beutel 3 zum Transport übergeben werden. Zur Vereinfachung ist in Fig. 2 und Fig. 3 die optionale Führungsschiene 5 zwischen den Lineartransporten 1 und 7 nicht dargestellt.

Fig. 2 zeigt das zweite Ausführungsbeispiel der erfindungsgemäßen Vorrichtung zu Beginn der Übergabe des Beutels 3 durch eine nicht dargestellte Beutelübergabevorrichtung an den Lineartransport 1. Das Absenken des Beutels 3 in die Beutelaufnahme 2 erfolgt bei kontinuierlichem Betrieb der Lineartransporte 1 und 7, sobald sich eine leere Beutelaufnahme 2 unterhalb des Beutels 3 befindet. Der kontinuierliche Betrieb der Lineartransporte 1,7 wird dabei aufgrund der größeren Breite der Beutelaufnahmen 2 in Transportrichtung im Vergleich zur Breite der aufzunehmenden Beutel 3 ermöglicht. Nach erfolgter Übergabe der Beutel 3 an den Lineartransport 1 oder 7 befindet sich der Beutel 3 innerhalb der Beutelaufnahme 2 am entgegengesetzt zur Transportrichtung liegenden Ende der Beutelaufnahme 2, wie Fig. 3 zeigt. Mit Hilfe der kontinuierlich betriebenen Lineartransporte 1 und 7 kann nun eine hohe Stückzahl von Beuteln 3 an eine weitere, nicht dargestellte Beutelbearbeitungsstation oder beispielsweise an einen nächsten Lineartransport übergeben werden.

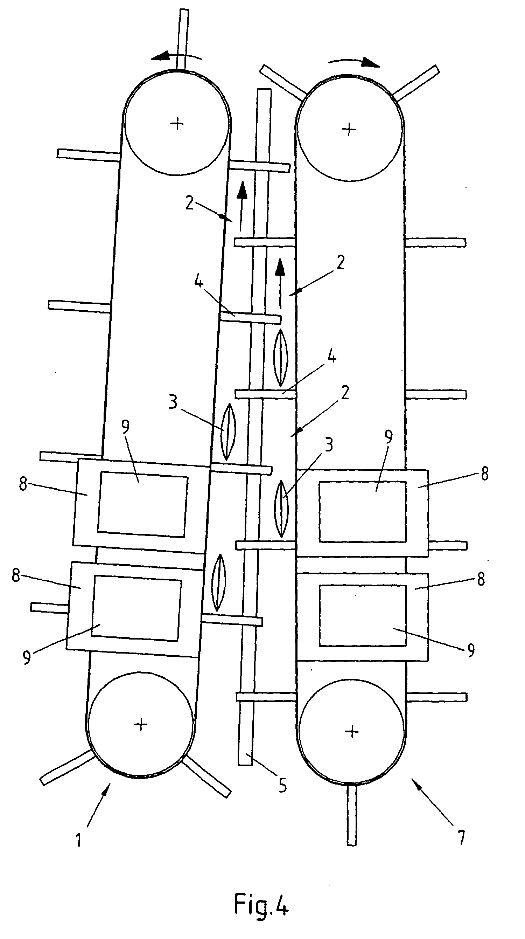

Die Fig. 4 zeigt in einer Draufsicht ein drittes Ausführungsbeispiel mit konisch aufeinander zulaufend angeordneten Lineartransporten 1, 7 und insgesamt vier Beutelübergabevorrichtungen 8 mit einer mit einem Magazin versehene Anlegestation 9. Die Beutelübergabevorrichtungen 8 und die Anlegestationen 9 sind dabei in Fig. 4 nur schematisch dargestellt.

Wie aus Fig. 4 zu erkennen ist, kann durch eine höhere Anzahl von Beutelübergabevorrichtungen 8, welche in Transportrichtung der Lineartransporte 1,7 nebeneinander oder, wie in dem dargestellten Ausführungsbeispiel, zusätzlich gegenüberliegend angeordnet sind, die Anzahl der pro Zeiteinheit transportierbaren Beutel 3 vergrößert und die Förderkapazität der Lineartransporte 1, 7 vollständig ausgenutzt werden. Die mit einem Magazin versehene Anlegestation 9 ermöglicht einerseits zusammen mit den Beutelübergabevorrichtungen 8 eine kontinuierliche Abgabe von Beuteln 3 an die Lineartransporter 1, 7 mit hoher Frequenz und andererseits eine einfache Ankopplung an die aus dem Stand der Technik bekannten Vorrichtungen zur Entnahme und Vereinzelung der Beutel 3.

Die in Fig. 4 dargestellten Lineartransporte 1 und 7 sind in Transportrichtung konisch zulaufend angeordnet, so dass die angeformten Aufnahmeelemente 4 zu Beginn des Transports der Beutel 3 durch die gegenüberliegenden Lineartransporte 1,7 einen größeren Abstand von der seitlich führenden Führungsschiene 5 aufweisen als am Ende des Transportes bei der Übergabe der Beutel 3.

Im Auslaufbereich der gegenüberliegend angeordneten Lineartransporte 1 und 7 unterteilen die Aufnahmeelemente 4 die Beutelaufnahmen 2 des jeweils gegenüberliegenden Lineartransportes 1 oder 7 in zwei mindestens die Breite der Beutel 3 aufweisende Beutelaufnahmehälften, in welchen jeweils ein Beutel von jeweils einem der Lineartransport 1,7 transportiert wird. Die Beutel 3 werden dadurch an einen der erfindungsgemäßen Vorrichtung nachgeordneten Lineartransport nicht nur mit einem möglichst kleinen Abstand senkrecht zur Transportrichtung übergeben, sondern auch mit einem minimalen Abstand in Transportrichtung. Durch den geringen Abstand der Beutel 3 senkrecht zur Transportrichtung verbessert sich die Übergabe, beispielsweise an einen nachgeordneten, nicht dargestellten Lineartransport erheblich. Wohingegen die Verringerung des Abstandes der Beutel 3 in Transportrichtung die Kapazität der erfindungsgemäßen Vorrichtung bei gleichbleibender Geschwindigkeit der Lineartransporte 1,7 maximiert.

## Patentansprüche

1. Vorrichtung zur kontinuierlichen Abgabe von Beuteln (3) mit mindestens einer Beutelübergabevorrichtung (8) und mindestens einem Lineartransport (1,7), wobei die Beutelübergabevorrichtung die Beutel an mindestens einen Lineartransport übergibt,
**dadurch gekennzeichnet, dass** ein kontinuierlich arbeitender Lineartransport (1) mit Beutelaufnahmen (2) vorgesehen ist und die Breite der Beutelaufnahmen (2) in Transportrichtung größer als die Breite der aufzunehmenden Beutel (3) ist.

2. Vorrichtung nach Anspruch 1,
**dadurch gekennzeichnet, dass** die Beutelaufnahmen (2) am Lineartransport (1) befestigte oder an den Lineartransport (1) angeformte Aufnahmeelemente (4) aufweisen.

3. Vorrichtung nach Anspruch 1 oder 2,
**dadurch gekennzeichnet, dass** der Lineartransport (1) mindestens eine die Beutel (3) führende seitliche und/oder untere Führungsschiene (5, 6) aufweist.

4. Vorrichtung nach einem der Ansprüche 2 bis 3,
**dadurch gekennzeichnet, dass** die Aufnahmeelemente (4) mindestens eine Ausnehmung in der Querschnittsfläche senkrecht zur Transportrichtung aufweisen und mindestens eine Ausnehmung an eine seitliche Führungsschiene (5) angepasst ist.

5. Vorrichtung nach einem der Ansprüche 1 bis 4,
**dadurch gekennzeichnet, dass** ein zweiter kontinuierlich arbeitender Lineartransport (7) mit Beutelaufnahmen (2) vorgesehen ist und beide Lineartransporte (1,7) gegenüberliegend und parallel angeordnet sind.

6. Vorrichtung nach Anspruch 5,
**dadurch gekennzeichnet, dass** die gegenüberliegenden Lineartransporte (1,7) in Transportrichtung konisch zulaufend angeordnet sind.

7. Vorrichtung nach Anspruch 5 oder 6,
**dadurch gekennzeichnet, dass** die Breite der Beutelaufnahmen (2) größer oder gleich der doppelten Breite der aufzunehmenden Beutel (3) ist.

8. Vorrichtung nach einem der Ansprüche 1 bis 7,
**dadurch gekennzeichnet, dass** eine Mehrzahl von Beutelübergabevorrichtungen (8) vorgesehen sind.

9. Vorrichtung nach einem der Ansprüche 1 bis 8,
**dadurch gekennzeichnet, dass** die Beutelübergabevorrichtungen (8) eine mit einem Magazin versehene Anlegestation (9) aufweisen.

10. Vorrichtung nach einem der Ansprüche 1 bis 9,
**dadurch gekennzeichnet, dass** als Lineartransport (1, 7) mindestens ein Riemenförderer vorgesehen ist.

## Claims

1. Device for continual delivery of bags (3) having at least one bag transferring device (8) and at least one linear conveyor (1,7) whereby the bag transferring device transfers the bags to at least one linear conveyor, **characterised** wherein a continually operating linear conveyor (1) is provided with bag holding fixtures (2) and the width of the bag holding fixtures (2) in the direction of conveyance is greater than the width of the bags (3) to be picked up.

2. Device according to claim 1, **characterised** wherein the bag holding fixtures (2) exhibit holding elements (4) attached to the linear conveyor (1) or integrally formed in the linear conveyor (1).

3. Device according to claim 1 or claim 2, **characterised** wherein the linear conveyor (1) exhibits at least one lateral and / or one lower guide bar (5,6) which guides the bags (3).

4. Device according to one of claims 2 and 3, **characterised** wherein the holding elements (4) exhibit at least one recess in the cross section area perpendicular to the conveyance direction and at least one recess is made to fit a lateral guide bar (5).

5. Device according to one of the claims 1 to 4, **characterised** wherein a second continually operating linear conveyor (7) is provided with bag holding fixtures (2) and that both linear conveyors are arranged to lie opposite and parallel to one another.

6. Device according to claim 5, **characterised** wherein the linear conveyors lying opposite to one another (1,7) are arranged to be tapered in the conveyance direction.

7. Device according to claim 5 or 6, **characterised** wherein width of the bag holding fixtures (2) is greater than or equal to double the width of the bags to be picked up (3).

8. Device according to one of claims 1 to 7, **characterised** wherein a number of bag transferring devices (8) are provided.

9. Device according to one of claims 1 to 8, **characterised** wherein the bag transferring devices (8) exhibit a feeder station provided with a magazine.

10. Device according to one of claims 1 to 9, **characterised** wherein at least one belt conveyor is provided as linear conveyor (1,7).

## Revendications

1. Dispositif de distribution continue de sachets (3) comprenant au moins un dispositif de transfert de sachets (8) et au moins un convoyeur linéaire (1, 7), le dispositif de transfert de sachets transférant les sachets sur au moins un convoyeur linéaire, **caractérisé en ce qu'**un convoyeur linéaire (1) fonctionnant en continu est pourvu de réceptions de sachets (2) et la largeur des réceptions de sachets (2) dans la direction de transport est supérieure à la largeur des sachets (3) destinés à être reçus.

2. Dispositif selon la revendication 1, **caractérisé en ce que** les réceptions de sachets (2) comprennent des éléments de réception (4) fixés sur le convoyeur linéaire (1) ou formés sur le convoyeur linéaire (1).

3. Dispositif selon la revendication 1 ou 2, **caractérisé en ce que** le convoyeur linéaire (1) comprend au moins un rail de guidage (5, 6) latéral et/ou inférieur guidant les sachets (3).

4. Dispositif selon l'une quelconque des revendications 2 à 3, **caractérisé en ce que** les éléments de réception (4) comprennent au moins un évidement dans la surface en section transversale perpendiculairement à la direction de transport et au moins un évidement est adapté à un rail de guidage latéral (5).

5. Dispositif selon l'une quelconque des revendications 1 à 4, **caractérisé en ce qu'**un second convoyeur linéaire (7) fonctionnant en continu est pourvu de réceptions de sachets (2) et les deux convoyeurs linéaires (1, 7) sont disposés à l'opposé et parallèlement.

6. Dispositif selon la revendication 5, **caractérisé en ce que** les convoyeurs linéaires (1, 7) opposés sont disposés dans la direction de transport en se terminant de façon conique.

7. Dispositif selon la revendication 5 ou 6, **caractérisé en ce que** la largeur des réceptions de sachets (2) est supérieure ou égale au double de la largeur des sachets (3) destinés à être reçus.

8. Dispositif selon l'une quelconque des revendications 1 à 7, **caractérisé en ce qu'**il est prévu une pluralité de dispositifs de transfert de sachets (8).

9. Dispositif selon l'une quelconque des revendications 1 à 8, **caractérisé en ce que** les dispositifs de transfert de sachets (8) comprennent une station d'appui (9) pourvue d'un magasin.

10. Dispositif selon l'une quelconque des revendications 1 à 9, **caractérisé en ce qu'**il est prévu au moins un convoyeur à courroie comme convoyeur linéaire (1, 7).
